# EUROPÄISCHE PATENTSCHRIFT

(11) **EP 2 145 598 B1**
(45) Veröffentlichungstag und Bekanntmachung des Hinweises auf die Patenterteilung: **24.08.2011**
(21) Anmeldenummer: 09008468.2
(22) Anmeldetag: 29.06.2009
(51) Int. Cl.: A61C 3/03, A61C 3/06

(54) **Schallaktivierbares Dentalinstrument**
Sound activated dental instrument
Instrument dentaire vibrant

(30) Priorität: 14.07.2008 DE 102008033062
(43) Veröffentlichungstag der Anmeldung: 20.01.2010
(73) Patentinhaber: Gebr. Brasseler GmbH & Co. KG, D-32657 Lemgo (DE)
(72) Erfinder: Striegel, Marcus, Dr., 90480 Nürnberg (DE); Schwenk, Thomas, Dr., 90607 Rückersdorf (DE)
(74) Vertreter: Weber, Joachim

(56) Entgegenhaltungen:
- EP-A1- 0 898 941
- EP-A1- 0 962 192
- EP-A2- 0 868 887
- WO-A1-03/070121
- CN-Y- 201 070 397
- JP-U- 4 104 815
- US-A- 3 919 775
- US-A1- 2004 202 981

## Beschreibung

Die Erfindung bezieht sich auf ein Dentalinstrument, welches durch Schall oder Ultraschall aktivierbar ist, wobei das Dentalinstrument einen Arbeitskopf aufweist, der an einem Schaft befestigt ist. Zumindest Teilbereiche des Arbeitskopfes sind als abrasiv wirkende Oberfläche ausgeführt oder mit abrasiven Partikeln, beispielsweise Diamantkörnern, belegt.

Derartige Instrumente, welche auch als Schallspitzen bezeichnet werden, werden üblicherweise zur Feinpräparation von Zähnen verwendet. Ein besonderes Einsatzgebiet ist dabei der Approximalbereich eines Zahnes, an welchem dieser an einem Nachbarzahn angrenzt. Bei der Feinpräparation ist es somit nicht wünschenswert, dass der Nachbarzahn von dem Dentalinstrument mitbearbeitet wird. Beschädigungen der jeweiligen Nachbarzähne sind somit auszuschließen. Aus diesem Grunde sind die aus dem Stand der Technik bekannten Dentalinstrumente oder Schallspitzen so ausgebildet, dass diese nur einseitig mit abrasivem Material belegt sind, so dass eine nicht-belegte Seite dem Nachbarzahn zugewandt ist.

Dentalinstrumente der beschriebenen Art zeigen beispielsweise die EP 0 868 887 A2 oder die DE 197 52 152 A1.

Insbesondere bei der minimalinvasiven chirurgischen Kronenverlängerung ist es erforderlich, das überschüssige Knochenmaterial gezielt abzutragen, ohne den Zahnfleischsaum und den Zahn zu beschädigen. Dies ist mit dem aus dem Stand der Technik bekannten Dentalinstrument nicht oder nur sehr bedingt möglich.

Die JP 04 104815 U zeigt ein Dentalinstrument, welches meißelartig oder schaberartig ausgebildet ist und nur entlang der Schneidkante des Arbeitskeils wie ein Meißel oder Schaber einsetzbar ist. Die Querschnittsformen können rechteckig oder abgerundet sein.

Aus der CN 201 070 397 Y ist ein Dentalinstrument gemäß dem Oberbegriff des Anspruchs 1 bekannt, welches einen kugelartigen Arbeitskopf aufweist, der mit abrasiven Partikeln belegt ist und eine geringfügige Abflachung aufweist.

Der Erfindung liegt die Aufgabe zugrunde, ein Dentalinstrument der eingangs genannten Art zu schaffen, welches bei einfachem Aufbau und einfacher, kostengünstiger Ausgestaltung zur chirurgischen Kronenverlängerung besonders geeignet ist.

Erfindungsgemäß wird die Aufgabe durch die Merkmalskombination des Anspruchs 1 gelöst, die Unteransprüche zeigen weitere vorteilhafte Ausgestaltung der Erfindung. Erfindungsgemäß ist somit vorgesehen, dass an dem Arbeitskopf des Dentalinstruments an dessen distalem Ende eine kugelförmige Grundform vorgesehen ist, deren Außenseite mit abrasiven Partikeln belegt ist. Die kugelförmige Grundform ist dabei beidseitig abgeflacht, so dass sich die Form einer Kugelschicht oder Kugelzone ergibt. Somit weist der Arbeitskopf eine obere und eine untere abgeflachte Seite auf, welche jeweils flach ausgebildet sind und nicht mit abrasiven Partikeln versehen sind. Auch der restliche Bereich des Arbeitskopfes ist nicht mit abrasiven Partikeln belegt.

Der Operateur oder Zahnarzt kann somit in sehr gezielter Weise Knochenmaterial abtragen, ohne dass die Gefahr besteht, dass der Zahnfleischsaum, der Zahn oder das Zahnfleisch verletzt werden. Hierdurch ist eine besonders präzise Präparation möglich.

In einer besonders günstigen Ausgestaltung der Erfindung ist vorgesehen, dass der Schaft und die Kugelschicht der halbkugelförmigen oder tropfenförmigen Grundform des distalen Endes des Arbeitskopfes bis zu einer Mittelebene der Kugel und des Endbereichs des Schaftes abgeflacht sind. Es ergibt sich somit die Gestalt einer Halbkugel, deren andere Seite ebenfalls abgeflacht ist. Die Grundform weist somit im Bereich der abgeflachten-oberen Ebene einen Durchmesser auf, welcher gleich ist dem Durchmesser der Kugel.

Der Schaft ist bevorzugterweise mit einem im Wesentlichen kreisrunden Querschnitt versehen und bildet durch die beidseitigen Abflachungen somit im distalen Bereich des Arbeitskopfes einen flachen Steg. Dieser weist zusammen mit der kugelschichtförmigen Endform-bevorzugterweise eine im Wesentlichen gleiche Dicke auf. Die gleiche Dicke ist bevorzugterweise gleichbleibend ausgebildet.

Weiterhin erweist es sich als besonders vorteilhaft, wenn die abgeflachte obere Seite und die abgeflachte untere Seite jeweils eben ausgebildet sind. Günstig ist es dabei, wenn die beiden eben ausgebildeten Seiten zueinander parallel sind oder leicht konisch zulaufen und/oder glatt ausgebildet sind. Zusätzlich ist es möglich, die abgeflachten Seiten mit einer Hartschicht zu versehen, beispielsweise aus TiN oder ZrO.

Die kugelförmigen Grundformen können erfindungsgemäß beispielsweise in einem Durchmesserbereich von 1,5 bis 4 mm ausgebildet sein, bevorzugte Durchmesser liegen in einem Bereich von 2,0 bis 3,0 mm.

Die Dicke des abgeflachten Teils beträgt bevorzugterweise zwischen 0,5 und 1 mm bevorzugt 0,8 mm.

Weiterhin ist es erfindungsgemäß besonders vorteilhaft, wenn der Arbeitskopf mit zumindest einer Tiefenmarkierung versehen ist. Mittels des erfindungsgemäßen Dentalinstruments kann im Rahmen einer chirurgischen Kronenverlängerung - sofern dies aus ästhetischen oder funktionalen Gründen erforderlich ist - der überschüssige Knochen abgetragen werden, so dass die Kronen im sichtbaren Bereich die gleiche Länge haben. Dabei kommt es darauf an, dass zwischen dem Kronenrand und dem Zahnfleischsaum ein Bereich von ca. 3 mm entsteht.

Mittels der erwähnten Tiefenmarkierung ist es somit in besonders günstiger Weise möglich, beispielsweise bei Aufbringung einer Markierung mit einem Abstand von 3 mm vom distalen Ende des Arbeitskopfes dem Anwender auf einfache Art und Weise zu zeigen, wenn er die gewünschte Tiefe unterhalb des Zahnfleisches, beispielsweise 3 mm bei der Präparation erreicht hat.

Mittels des erfindungsgemäßen Dentalinstruments ist auf einfache, schnelle und schonende Art und Weise eine chirurgische Kronenverlängerung durchführbar.

Im Vergleich zu den aus dem Stand der Technik bekannten Dentalinstrumenten (Schallspitzen) ist das erfindungsgemäße Dentalinstrument somit beidseitig abgeflacht und nur am distalen Ende des Kopfes mit abrasiven Partikeln (beispielsweise Diamantkorn) belegt. Die abrasiv wirkende Grundform ist somit Teil einer Kugel, nämlich eine Kugelschicht oder Kugelzone, wobei die Kugelschicht oder Kugelzone bis zur Mitte der Grundform der Kugel abgeflacht ist.

Im Folgenden wird die Erfindung anhand von Ausführungsbeispielen in Verbindung mit der Zeichnung beschrieben. Dabei zeigt:
- Fig. 1: eine Seitenansicht eines ersten Ausführungsbeispiels,
- Fig. 2: eine linksseitige Ansicht, bezogen auf Fig. 1, des Arbeitskopfes,
- Fig. 3: eine rechtsseitige Ansicht, bezogen auf Fig. 1, des Arbeitskopfes,
- Fig. 4-6: analoge Ansichten zu den Fig. 1-3 eines weiteren Ausführungsbeispiels, und
- Fig. 7: eine schematische Darstellung der Grundform der Kugelschicht bzw. Kugelzone.

Bei den Ausführungsbeispielen sind -gleiche Teile mit gleichen Bezugsziffern versehen.

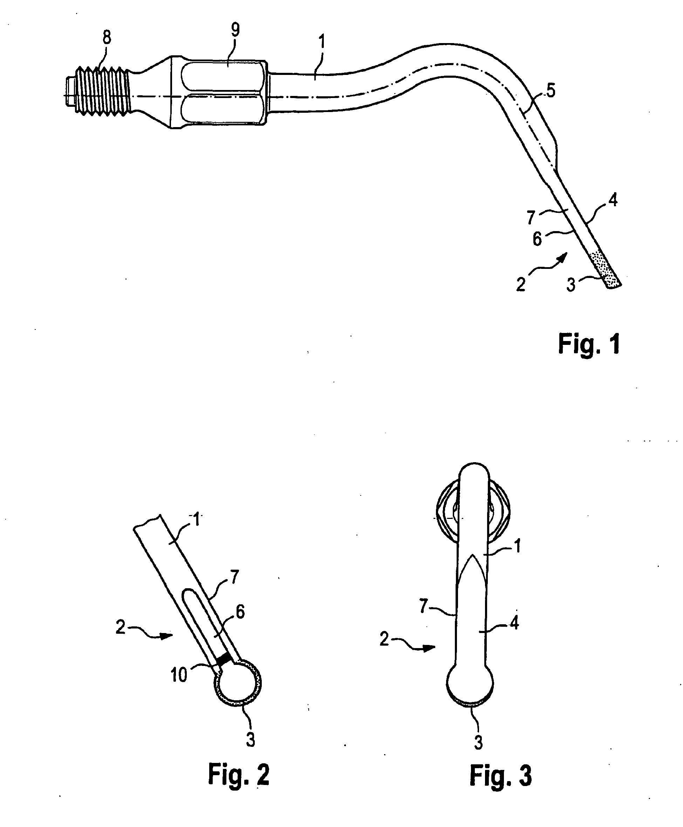

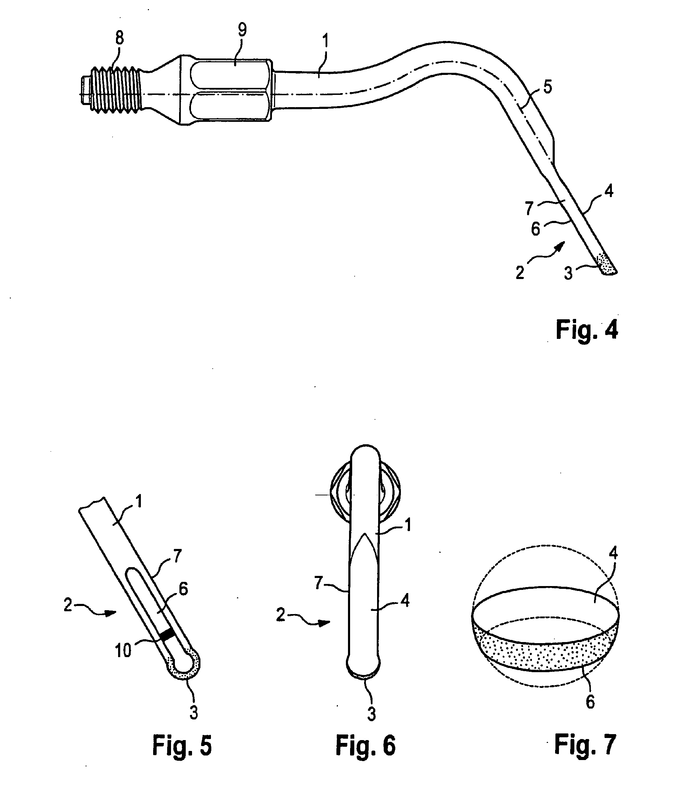

Das in den Fig. 1 und 4 gezeigte Dentalinstrument weist an seinem Endbereich ein Gewinde 8 auf, welches in üblicher Weise in einem Anschlussstück einschraubbar ist. Hierzu dient ein Mehrkant 9. Weiterhin weist das Dentalinstrument einen Schaft 1 -auf, welcher einen im Wesentlichen kreisförmigen Querschnitt aufweist und geeignet gebogen ist.

Am Ende des Schaftes 1 ist ein Arbeitskopf 2 ausgebildet, der einen abgeflachten Steg 7 sowie am distalen Ende eine kugelförmige oder kugelschichtförmige Grundform 3 aufweist.

Der Steg 7 sowie die kugelförmige Grundform 3 sind an einer oberen Seite 4 bis zu einer Mittelebene 5 abgeflacht. Der Steg 7 ist nicht mit abrasiven Partikeln belegt, lediglich die kugelförmige oder kugelschichtförmige Grundform weist abrasive Partikel auf.

Gegenüberliegend zu der oberen Seite 4 ist eine ebenfalls abgeflachte untere Seite 6 vorgesehen.

In einem Abstand von beispielsweise 3 mm zum distalen Ende der kugelförmigen Grundform 3 ist eine Tiefenmarkierung 10 ausgebildet, beispielsweise durch eine Lasergravur oder Ähnliches.

Die Fig. 7 zeigt eine vereinfachte Darstellung der Kugelschicht oder Kugelzone, welche am distalen Ende des Arbeitskopfes 2 durch die kugelförmige oder kugelschichtförmige Grundform 3 ausgebildet ist. Es entsteht somit eine an ihrer durch die kugelförmige Grundform gebildeten Außenseite mit abrasiven Partikeln belegte Kugelschicht oder Kugelzone. Die abgeflachten Bereiche der Kugelschicht oder Kugelzone sind nicht mit abrasiven Partikeln belegt, so wie dies in den Figuren dargestellt ist.

### Bezugszeichenliste

- 1: Schaft
- 2: Arbeitskopf
- 3: Kugelförmige/kugelschichtförmige Grundform
- 4: Obere Seite
- 5: Mittelebene
- 6: Untere Seite
- 7: Steg
- 8: Gewinde
- 9: Mehrkant
- 10: Tiefenmarkierung

## Patentansprüche

1. Schallaktivierbares Dentalinstrument mit einem an einem Schaft (1) befestigten Arbeitskopf (2), welcher an seinem vorderen Endbereich mit abrasiven Partikeln belegt ist, wobei der Arbeitskopf (2) an seinem distalen Ende eine kugelförmige Grundform (3) aufweist, welche an ihrer Außenseite mit den abrasiven Partikeln belegt ist **dadurch gekennzeichnet, dass** der Arbeitskopf (2) an einer oberen Seite (4), bezogen auf eine Mittelebene (5) der Kugel bis zu der Mittelebene (5) abgeflacht ist und wobei der Arbeitskopf (2) auf der der oberen abgeflachten Seite (4) gegenüberliegenden unteren Seite (6) abgeflacht ist.

2. Dentalinstrument nach Anspruch 1, **dadurch gekennzeichnet, dass** die beidseitig abgeflachte kugelförmige Grundform (3) die Form einer Kugelschicht aufweist.

3. Dentalinstrument nach Anspruch 1 oder 2, **dadurch gekennzeichnet, dass** der Schaft (1) einen im Wesentlichen kreisrunden Durchmesser aufweist und im Bereich des Arbeitskopfes (2) in Form eines flachen Steges (7) ausgebildet ist.

4. Dentalinstrument nach einem der Ansprüche 1 bis 3, **dadurch gekennzeichnet, dass** der Steg (7) und die kugelschichtförmige Grundform (3) eine gleiche Dicke aufweisen.

5. Dentalinstrument nach einem der Ansprüche 3 oder 4, **dadurch gekennzeichnet, dass** der Steg (7) und die kugelschichtförmige Grundform (3) eine gleichbleibende Dicke aufweisen.

6. Dentalinstrument nach einem der Ansprüche 1 bis 5, **dadurch gekennzeichnet, dass** die abgeflachte obere Seite (4) und die abgeflachte untere Seite (6) jeweils eben ausgebildet sind.

7. Dentalinstrument nach einem der Ansprüche 1 bis 6, **dadurch gekennzeichnet, dass** die abgeflachte obere Seite (4) und die abgeflachte untere Seite (6) zueinander parallel ausgebildet sind.

8. Dentalinstrument nach einem der Ansprüche 1 bis 7, **dadurch gekennzeichnet, dass** die abgeflachte obere Seite (4) und die abgeflachte untere Seite (6) jeweils glatt ausgebildet sind.

9. Dentalinstrument nach einem der Ansprüche 1 bis 6, **dadurch gekennzeichnet, dass** die abgeflachte obere Seite (4) und die abgeflachte untere Seite (6) mit einer Hartschicht versehen sind.

10. Dentalinstrument nach einem der Ansprüche 1 bis 8, **dadurch gekennzeichnet, dass** der Arbeitskopf (2) mit zumindest einer Tiefenmarkung (10) versehen ist.

## Claims

1. An acoustically activated dental instrument, comprising a working head (2) attached to a shaft (1), which working head is covered with abrasive particles at its front end portion, wherein the working head (2) has a spherical basic shape (3) at its distal end, the outside of which is covered with abrasive particles, **characterized in that** the working head (2) is flattened at an upper side (4) thereof, in relation to a center plane (5) of the sphere to the center plane (5), and wherein the working head (2) is flattened on the lower side (6) opposite to the upper flattened side (4).

2. The dental instrument of claim 1, **characterized in that** the spherical basic shape (3) flattened on both sides has the shape of a spherical layer.

3. The dental instrument of claim 1 or 2, **characterized in that** the shaft (1) has a substantially circular diameter and is formed in the shape of a flat web (7) in the region of the working head (2).

4. The dental instrument of one of claims 1 to 3, **characterized in that** the web (7) and the spherical layer-wise basic shape (3) have an identical thickness.

5. The dental instrument of one of claims 3 or 4, **characterized in that** the web (7) and the spherical layer-wise basic shape (3) have a continuous thickness.

6. The dental instrument of one of claims 1 to 5, **characterized in that** the flattened upper side (4) and the flattened lower side (6) are respectively formed planar.

7. The dental instrument of one of claims 1 to 6, **characterized in that** the flattened upper side (4) and the flattened lower side (6) are formed parallel to each other.

8. The dental instrument of one of claims 1 to 7, **characterized in that** the flattened upper side (4) and the flattened lower side (6) are respectively formed flush.

9. The dental instrument of one of claims 1 to 6, **characterized in that** the flattened upper side (4) and the flattened lower side (6) are provided with a hard layer.

10. The dental instrument of one of claims 1 to 8, **characterized in that** the working head (2) is provided with at least one depth marking (10).

## Revendications

1. Instrument dentaire vibrant comportant une tête de travail (2) fixée à une tige (1) qui est dotée dans sa zone terminale avant, de particules abrasives, la tête de travail (2) présentant au niveau de son extrémité distale, une forme de base sphérique (3) qui est dotée sur son côté extérieur des particules abrasives, **caractérisé en ce que** la tête de travail (2) est aplatie sur un côté supérieur (4) par rapport à un plan médian (5) de la sphère jusqu'au plan médian (5) et la tête de travail (2) est aplatie du côté inférieur (6) opposé au côté aplati supérieur.

2. Instrument dentaire selon la revendication 1, **caractérisé en ce que** la forme de base sphérique (3) aplatie des deux côtés présente la forme d'une couche sphérique.

3. Instrument dentaire selon la revendication 1 ou 2, **caractérisé en ce que** la tige (1) présente essentiellement un diamètre circulaire et est constituée dans la zone de la tête de travail (2) sous la forme d'une âme plate (7).

4. Instrument dentaire selon l'une des revendications 1 à 3, **caractérisé en ce que** l'âme (7) et la forme de base sphérique (3) présentent une même épaisseur.

5. Instrument dentaire selon l'une des revendications 3 ou 4, **caractérisé en ce que** l'âme (7) et la forme de base sphérique (3) présentent une épaisseur constante.

6. Instrument dentaire selon l'une des revendications 1 à 5, **caractérisé en ce que** le côté supérieur aplati (4) et le côté inférieur aplati (6) sont formés respectivement uniformément.

7. Instrument dentaire selon l'une des revendications 1 à 6, **caractérisé en ce que** le côté supérieur aplati (4) et le côté inférieur aplati (6) sont constitués en parallèle.

8. Instrument dentaire selon l'une des revendications 1 à 7, **caractérisé en ce que** le côté supérieur aplati (4) et le côté inférieur aplati (6) sont respectivement lisses.

9. Instrument dentaire selon l'une des revendications 1 à 6, **caractérisé en ce que** le côté supérieur aplati (4) et le côté inférieur aplati (6) sont dotés d'un revêtement dur.

10. Instrument dentaire selon l'une des revendications 1 à 8, **caractérisé en ce que** la tête de travail (2) est dotée au moins d'une jauge de profondeur (10).
